Europäisches Patentamt

European Patent Office

Office européen des brevets

(19)

(11) EP 0 468 582 B1

(12) FASCICULE DE BREVET EUROPEEN

(45) Date de publication et mention
de la délivrance du brevet:
**13.03.1996 Bulletin 1996/11**

(51) Int Cl.⁶: **G01N 23/20**, G01B 15/02

(21) Numéro de dépôt: **91201892.6**

(22) Date de dépôt: **18.07.1991**

(54) **Dispositif de diffractométrie à rayons X et utilisation de ce dispositif**

Vorrichtung für Röntgen-Diffraktometrie und Verwendung der Vorrichtung

Apparatus for X-ray diffractometry and use of this apparatus

(84) Etats contractants désignés:
**DE FR GB NL**

(30) Priorité: **24.07.1990 FR 9009443**

(43) Date de publication de la demande:
**29.01.1992 Bulletin 1992/05**

(73) Titulaires:
• **LABORATOIRES D'ELECTRONIQUE PHILIPS
S.A.S.
F-94450 Limeil-Brévannes (FR)**
Etats contractants désignés:
**FR**
• **Philips Electronics N.V.
NL-5621 BA Eindhoven (NL)**
Etats contractants désignés:
**DE GB NL**

(72) Inventeurs:
• **Schiller, Claude, Société Civile S.P.I.D.
F-75008 Paris (FR)**
• **Weber, Jean-Pierre, Société Civile S.P.I.D.
F-75008 Paris (FR)**

(74) Mandataire: **Chaffraix, Jean et al
Société Civile S.P.I.D.
156, Boulevard Haussmann
F-75008 Paris (FR)**

(56) Documents cités:
**EP-A- 0 206 735            DE-A- 2 649 512
DE-A- 3 237 186**

## Description

L'invention concerne un dispositif de diffractométrie à rayons X, comprenant une source de rayons X, un dispositif de collimation de la source, un support pour un échantillon, un dispositif de collimation du faisceau réfléchi par l'échantillon et un compteur fournissant un signal de sortie sous la forme d'une tension proportionnelle au nombre de photons réfléchis par l'échantillon.

L'invention concerne également l'utilisation de ce dispositif en incidence rasante.

L'invention trouve son application dans la caractérisation de structures multicouches utilisées dans le domaine des rayons X, tels que par exemple les miroirs multicouches pour dispositifs optiques à rayons X, ainsi que la mesure des épaisseurs de couches de matériaux d'indices optiques différents, métalliques, semiconducteurs ou isolants.

Ainsi, l'invention permet la mesure des épaisseurs de couches nanométriques, la mesure de ces épaisseurs lorsque deux ou trois couches nanométriques de matériaux différents sont empilées (système bi- ou tricouches), la mesure du pas de répétition de l'empilement, la mesure des paramètres caractéristiques des matériaux constituant ces couches, et donc l'identification de ces matériaux, la détermination des rugosités de surface ou des rugosités moyennes de l'empilement.

Un dispositif de diffractométrie à rayons X est déjà connu de l'état de la technique par la commercialisation de l'appareil référencé PW1050 par la Société PHILIPS (I $\alpha$ E ANALYTICAL ALMELO, The Netherlands).

Ce dispositif comprend une source de rayons X, un système de fentes de collimation du faisceau issu de la source, un support pour un échantillon, disposé de manière à ce que le faisceau incident arrive sur ce dernier avec un angle dit d'incidence égal à $(\pi/2)-\theta$, ou, dit autrement : avec un angle $\theta$ avec le plan du porte-échantillon, un système de fentes de collimation du faisceau réfléchi, et un détecteur du nombre des photons réfléchis, du type compteur proportionnel.

Par compteur proportionnel il faut entendre un dispositif comprenant des gaz ionisables par le flux des photons à détecter et fournissant un signal sour la forme d'une tension proportionnelle au nombre des photons. En fait, la réponse du compteur proportionnel n'est linéaire que dans une certaine gamme d'intensités. Lorsque les intensités réfléchies par l'échantillon sont trop faibles ou trop fortes, on tombe en dehors de la région de linéarité du compteur.

Or le dispositif de diffractométrie déjà commercialisé n'est pas utilisable pour l'application envisagée de caractérisation d'échantillons multicouches, ni pour la mesure d'épaisseurs de couches, du fait qu'il ne peut travailler que dans une certaine gamme d'angles d'incidence. Ainsi cet appareil est parfaitement adapté à la mesure des paramètres de maille d'échantillons de poudres de matériaux divers, car dans le cas des poudres, les angles d'incidence ont des valeurs non extrêmes, c'est-à-dire généralement non situées dans le domaine des incidences rasantes ou des incidences orthogonales. La mesure des paramètres de maille est obtenue par l'interprétation des variations du signal de sortie du compteur proportionnel. Ces variations forment des pics qui ont une amplitude proportionnelle au nombre de photons reçus par le détecteur et dont la distance est aussi une caractéristique du matériau, et notamment de son paramètres de maille. La comparaison de ces mesures avec des données contenues dans des Tables de Classement permet de déterminer les paramètres de maille de la poudre étudiée et d'en déduire la nature du composé.

La mesure des paramètres de maille par cette méthode, au moyen de l'appareil connu dont la référence a été donnée, est fondée sur la relation dite de Bragg :

$$2d.Sin\ \theta = \lambda\ ,$$

qui lie $\lambda$ = la longueur d'onde de la source, valeur constante,

$\theta$ = l'angle entre le trajet du faisceau incident et un plan réticulaire du matériau étudié,

$d$ = le paramètre de maille du matériau constituant la poudre étudiée par exemple.

Du fait que l'appareil connu est prévu pour l'étude des poudres, dans des conditions éloignées de l'incidence rasante, les mesures au moyen de cet appareil ne sont applicables qu'à des matériaux ayant un paramètre de maille $\underline{d}$ de faible valeur.

Or, il est à ce jour indispensable de pouvoir caractériser non seulement des poudres, mais aussi des corps élaborés, par exemple des miroirs multicouches fonctionnant dans le domaine des rayons X mous, ou encore des couches minces métalliques, semiconductrices, ou isolantes, tous matériaux solides.

Par exemple, le corps élaboré dit miroir multicouches est formé de l'alternance d'au moins deux matériaux d'indices de réfraction différents : un matériau dit lourd et un matériau dit léger. L'espacement entre les couches est imposé par la structure du miroir.

La caractérisation de ce type de corps élaboré impose la mesure de grands paramètres $\underline{d}$. Par conséquent, il résulte de la relation citée plus haut, que, la longueur d'onde de la source étant fixée, seule la mesure à de très faibles angles d'incidence $\theta$ (incidence rasante) permet d'obtenir la caractérisation de matériaux de grands paramètres $\underline{d}$, ou encore dans le cas de la mesure d'épaisseurs de couches, permet la mesure d'épaisseurs comprises entre 1 et 300 nm.

L'appareil connu, dont les références ont été données, ne permet pas de travailler en incidence très rasante du fait des limitations du compteur proportionnel. En effet, en incidence rasante, les intensités réfléchies sont très fortes, et dues à un phénomène de saturation, le compteur proportionnel se trouve en dehors de la gamme d'intensités où sa réponse est linéaire. Par conséquent, l'appareil connu ne permet pas la caractérisation des échantillons envisagés, cités plus haut.

D'autre part, dans le cas des échantillons solides tels que les miroirs multicouches cités, pour réaliser les mesures, il faut pouvoir faire varier l'angle d'incidence $(\Pi/2)-\theta$ des valeurs où $\theta = 0$ aux valeurs où $\theta$ est encore petit mais non nul par exemple $\theta = 2°$ ou bien $\theta = 4°$. Durant cette variation, l'intensité réfléchie varie dans des grandes proportions. Si par exemple l'intensité réfléchie se trouve dans la gamme de linéarité du compteur proportionnel pour $\theta = 0°$, elle ne s'y trouve plus, par manque d'intensité pour $\theta = 2°$. Inversement, si elle se trouve dans la gamme de linéarité du compteur proportionnel pour $\theta = 2°$, elle ne s'y trouve pas pour $\theta = 0°$ du fait de l'augmentation trop forte de l'intensité réfléchie.

Une solution connue de l'homme du métier de l'optique au problème créé par une trop forte intensité lumineuse dans un système, est l'interposition d'un filtre absorbant.

Mais comme on l'a vu précédemment, cette solution n'est pas directement applicable à l'appareil connu du fait que si l'intensité réfléchie se trouve dans la gamme de linéarité du compteur dans une des conditions de mesure, elle ne s'y trouve plus dès que la ou les conditions pour la même mesure ont changé.

Il faut donc trouver une solution au problème de l'interposition d'un filtre donné en fonction de l'intensité photonique réfléchie par un échantillon donné lorsque les conditions de mesure varient au cours d'une même mesure.

La solution trouvée permettra alors de réaliser des mesures non seulement sur des échantillons solides mais aussi sur des échantillons à grand paramètres de maille, ainsi que sur des échantillons à la fois solides et à grands paramètres de maille, c'est-à-dire lorsque les paramètres de l'échantillon varient d'une mesure à l'autre.

Selon l'invention, ce problème est résolu au moyen d'un dispositif muni des caractéristiques citées dans le préambule et en outre muni des caractéristiques de la partie caractérisante de la revendication 1.

L'avantage d'un tel dispositif est que, dès que l'intensité réfléchie s'approche d'une valeur à partir de laquelle le compteur proportionnel ne travaille plus d'une façon linéaire, le filtre absorbant en action est automatiquement changé pour un autre filtre dont l'absorption est telle que le compteur proportionnel travaille à nouveau d'une façon linéaire.

Ainsi, d'une part le compteur proportionnel travaille toujours dans la gamme où il est linéaire, et d'autre part toutes les mesures peuvent se dérouler en continu, quel que soit l'angle, et/ou quel que soit l'échantillon, le manipulateur n'ayant pas à intervenir.

L'invention sera mieux comprise au moyen de la description suivante illustrée par les figures annexées dont :

- la figure 1 représente schématiquement un dispositif de diffractométrie standard, en outre muni d'un système d'automatisation des mesures selon l'invention ;
- la figure 2a qui représente schématiquement la partie mécanique de ce système d'automatisation en vue plane ;
- la figure 2b qui représente schématiquement la partie mécanique de ce système en coupe selon l'axe III-III de la figure 2a ;
- la figure 3 qui représente, selon un diagramme fonctionnel, le procédé de traitement du signal de mesure dans le système d'automatisation ;
- la figure 4a qui représente un exemple de mesure obtenue à l'aide du dispositif de diffractométrie muni du système d'automatisation, avant traitement informatique ;
- la figure 4b qui représente le même exemple de mesure après traitement informatique.

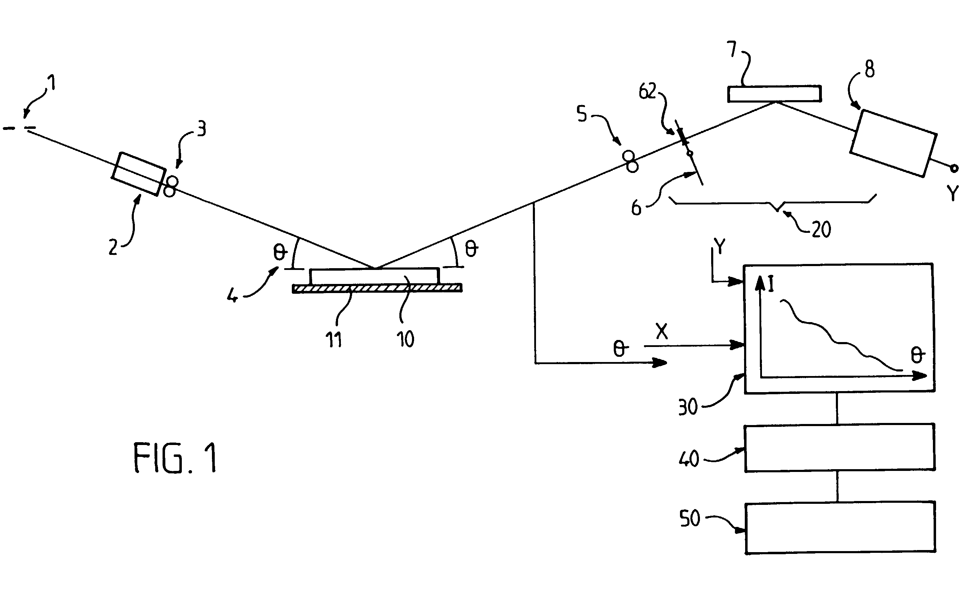

Tel que représenté sur la figure 1, un appareil de diffractométrie à rayons X, comprend au moins les éléments connus par l'appareil Philips PW1050 commercialisé, c'est-à-dire :

- une source linéaire 1, à rayons X ; en effet les sources de RX disponibles dans le commerce présentent un foyer linéaire ; cette source est en outre disposée vis-à-vis de l'axe optique du dispositif de manière à faire, avec cet axe, un angle plus ou moins grand, dit angle de prélèvement ; l'intensité lumineuse utilisable peut dépendre de l'angle de prélèvement ;
- un système collimateur 2 et 3 incluant des fentes de Sollers 2 et une fente de divergence 3 ;
- un porte-échantillon goniométrique 11 comprenant des moyens d'orientation de l'échantillon 10 non représentés ; ces moyens d'orientation comprennent en particulier le réglage de l'angle d'incidence ; pour des raisons de simplification de langage, on emploiera ci-après l'expression "incidence $\theta$" pour désigner l'angle $\theta$ entre le faisceau et le plan de l'échantillon lorsque l'angle d'incidence est $(\Pi/2)-\theta$ ;
- un système collimateur 5 formé d'une fente dite de réception ;
- un monochromateur 7 du type monochromateur graphite, dans le domaine des RX (rayons X) ;
- un compteur proportionnel 8.

Selon l'invention l'appareil connu est modifié pour permettre la mesure de grands paramètres $\underline{d}$, la valeur $\underline{d}$ des paramètres déterminée étant liée à $\theta$ et à $\lambda$, la longueur d'onde de la source par la relation

$$2\underline{d} \sin \theta = \lambda, \text{ dite relation de Bragg.}$$

D'une part, pour obtenir la mesure de paramètres $\underline{d}$ de plus en plus grands, on va agir sur le choix de la source, c'est-à-dire sur $\lambda$. A cet effet on choisira la source de RX parmi l'une de celles du tableau I qui indique les longueurs d'onde $\lambda$ en Å = (1/10nm) en fonction des raies K$\alpha$ de divers métaux-sources de RX.

D'autre part, on choisit de faire varier l'angle $\theta$ dans la gamme où l'incidence est rasante c'est-à-dire pour

$0° \leq \theta \leq 2°$ d'angle.

L'application de l'appareil modifié se fait à la détermination des paramètres de maille de matériaux solides, d'épaisseur de couches de matériaux multicouches comme des miroirs interférentiels pour RX, des valeurs de rugosité de surface ou bien de rugosité moyenne d'empilement.

Lorsque l'appareil travaille en incidence rasante, l'intensité réfléchie par un échantillon solide 10, placé sur le porte-échantillon 11, est beaucoup plus grande que lorsque l'échantillon est une poudre.

Pour un échantillon plan, il y a réflexion totale du faisceau, c'est-à-dire réflectivité égale à 1, jusqu'à un angle $\theta_C$ qui dépend en particulier de la longueur d'onde $\lambda$, de la densité et de la nature du matériau.

Il en résulte que le compteur proportionnel 8 reçoit une quantité de photons supérieure à celle qui est prévue par le constructeur et se trouve alors dans une région de fonctionnement non linéaire.

Pour résoudre ce problème, selon l'invention, on interpose sur le trajet du faisceau réfléchi par l'échantillon, entre la fente de réception 5 et le monochromateur graphite 7, un filtre 62 approprié, pour absorber une partie de l'intensité réfléchie de manière à ce que l'intensité du faisceau qui se propage vers le compteur proportionnel 8 corresponde à une région de fonctionnement linéaire de ce dernier.

De plus, lorsque pour effectuer les mesures, on fait varier l'angle d'incidence, par exemple entre 0 et 2°, l'intensité réfléchie varie. En fonction du matériau, l'intensité réfléchie peut diminuer dans certaine gamme de variation de l'angle $\theta$, montrer des pics pour certaines valeurs de $\theta$, l'amplitude des pics et la position des pics étant des caractéristiques du matériau qui permettent la détermination des paramètres énoncés plus haut par référence à des Tables de Classement.

Pour permettre l'utilisation du compteur proportionnel 8 continuellement dans une région de fonctionnnement linéaire quel que soit l'angle d'incidence $\theta$ et donc la valeur de l'intensité réfléchie, on prévoit selon l'invention des moyens 6 pour disposer entre la fente de réception 5 et le monochromateur graphite 7 une pluralité de filtres 62, par exemple 62a, 62b etc. L'absorption de ces filtres est choisie en fonction de l'intensité réfléchie pour que le compteur proportionnel 8 travaille toujours dans une région de fonctionnement linéaire.

Le tableau I donne en fonction des sources de RX et de leur longueur d'onde $\lambda$ (en Å) associée, des exemples de filtres en différents métaux (Ni, Al, cu) avec des épaisseurs e en $\mu$m pour obtenir les coefficients d'absorption $A = \dfrac{I_0}{I}$ ,

$I_0$ étant l'intensité incidente, et I l'intensité après absorption par le filtre.

Dans le tableau I, on donne des épaisseurs e de filtres, ainsi que le métal pour les réaliser, de manière à obtenir des coefficients d'absorption $\underline{A}$ aussi proches de la valeur 10 que possible ; on a aussi donné des exemples de filtres (épaisseur e, et matériau métallique) pour obtenir une absorption $\underline{A}$ aussi proche de 5 que possible. D'autres valeurs de l'absorption $\underline{A}$ peuvent être choisies par l'homme du métier en interpolant des valeurs à partir du tableau I. Par exemple, on obtient des coefficients d'absorption A de respectivement $10°$, $10^1$,...$10^n$ (n entier) en multipliant des épaisseurs e depuis e=0 (correspondant à A=1) jusqu'à nxe lorsque e correspond à un coefficient d'absorption d'environ 10.

Selon l'invention, on a ensuite prévu un système d'automatisation 20 de la mise en place du filtre approprié 62 pour que le compteur proportionnel travaille continuement dans une région de fonctionnement linéaire quelle que soit l'incidence $\theta$.

Le système d'automatisation 20 comprend d'une part des moyens mécaniques 6 pour supporter les filtres et les mettre en place et des moyens informatiques pour commander le déplacement du support de filtres.

Selon l'invention, on a de plus prévu un système (30, 40, 50) de traitement du signal Y issu du compteur proportionnel en fonction de l'information X constituée par l'incidence $\theta$, pour obtenir une courbe Y en fonction de X continue par l'association des tronçons de courbe obtenus dans les divers domaines d'intensité couverts lors d'une mesure, et pour obtenir une comparaison systématique avec des courbes théoriques de manière à effectuer automatiquement la détermination des paramètres recherchés.

Sur la figure 1, outre le système d'automatisation 20, on montre l'écran de visualisation 30 sur lequel apparaissent les courbes d'intensité I en fonction de l'angle $\theta$ ; l'ordinateur de traitement des informations est représenté par 40, et le bloc 50 représente les courbes théoriques obtenues sur l'ordinateur.

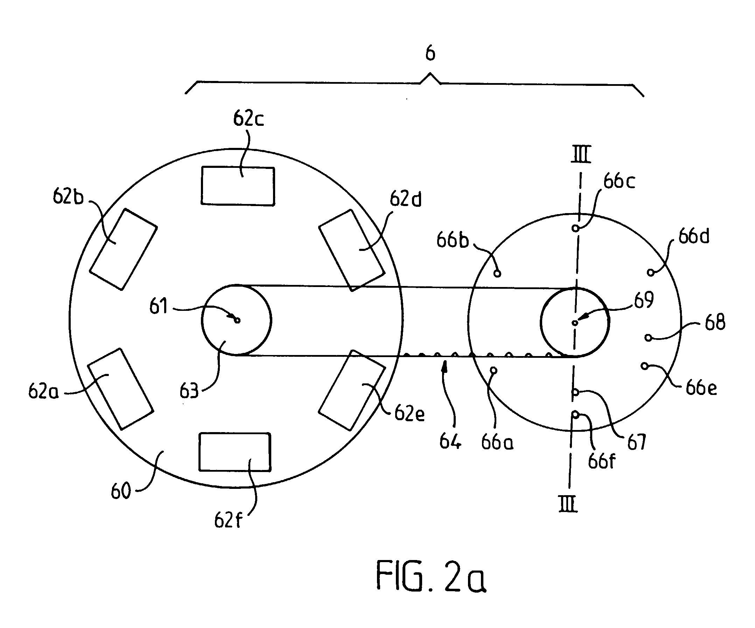

La figure 2a représente vue de face, c'est-à-dire perpendiculairement au plan de la figure 1, les moyens mécaniques 6 pour supporter les filtres et les mettre en place.

TABLEAU I

| Source | λ (Source) Å | Métal (Filtre | e (filtre) µm | A |
|---|---|---|---|---|
| Mo kα | 0,709 | Ni | 50 | 8,2 |
| Cu Kα | 1,542 | Ni | 50 | 9 |
| Ni Kα | 1,659 | Ni | 50 | 14,3 |
| Ni Kα | 1,659 | Al | 100 | 5,4 |
| Ni Kα | 1,659 | Al | 140 | 10,0 |
| Co Kα | 1,790 | Al | 100 | 8,11 |
| Fe Kα | 1,937 | Al | 60 | 5 |
| Fe Kα | 1,937 | Al | 90 | 10,8 |
| Cr Kα | 2,290 | Al | 60 | 12,93 |
| Cr Kα | 2,290 | A | 45 | 6,8 |
| | | $\rho(Ni)=8,90$ $\rho(Al)=2,70$ | | |

TABLEAU II

| Source | λ (Source) Å | Métal (Filtre) | N° (Filtre) | e (filtre) µm | A |
|---|---|---|---|---|---|
| Ni kα | 1,659 | Al | 62 e | 140 | 10 |
| | | | 62 d | 2 x 140 | $10^2$ |
| | | | 62 c | 3 x 140 | $10^3$ |
| | | | 62 b | 4 x 140 | $10^4$ |
| | | | 62 a | 5 x 140 | $10^5$ |
| | | | 62 f | 0 | 1 |

Ces moyens mécaniques 6 comprennent un support de filtres 60 muni de N fenêtres, pour recevoir N filtres. Lorsque N=6 comme représenté sur la figure 2a, les filtres sont référencés 62a, 62b, 62c, 62d, 62f et 62e. Ils sont disposés de manière à présenter, lorsque l'on passe l'un à l'autre de manière continue, une absorption décroissant d'un facteur constant.

Dans le cas particulier représenté à titre exemplatif sur la figure 2a, on a choisit un support de filtre 60 en forme de plateau circulaire pouvant tourner autour de son axe 61. Les filtres sont disposés dans des ouvertures périphériques également espacées. La valeur des coefficients d'absorption A des filtres est choisie pour décroître d'un facteur aussi proche de 10 que possible lorsque l'on passe de l'un à l'autre des filtres.

Ainsi, en utilisant le tableau I, on pourra réaliser le dispositif d'automatisation montré sur la figure 2a, en choisissant par exemple les différents filtres comme dans le tableau II, pour une source par exemple NiK α.

Afin d'amener un filtre donné 62 sur le trajet d'un faisceau de RX réfléchi par l'échantillon 10, le plateau 60 tourne autour de son axe 61 sous l'action d'une courroie de transmission 64 reliée à un second plateau 68. Ce plateau 68 est entraîné, par exemple par son axe 69, ou par tout autre moyen, en même temps que le plateau 60, par un premier moteur dit "moteur-filtres". Le second plateau 68 porte des ouvertures 66a à 66f en même nombre que les filtres 62a à 62f, réparties régulièrement à sa périphérie.

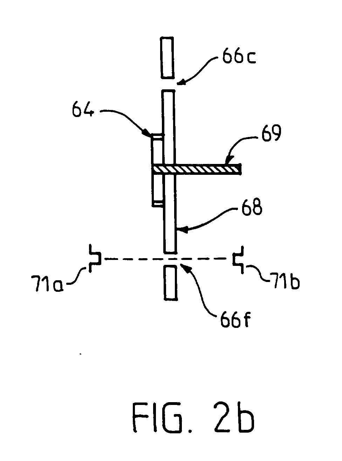

La figure 2b montre une coupe selon l'axe III-III de la figure 2a. Pour mettre en place un filtre donné sur le trajet du faisceau réfléchi par l'échantillon 10, on dispose deux diodes émettrices-réceptrices 71a, 71b de part et d'autre du plateau 68, à une distance de l'axe 69 égale à celle des ouvertures 66. Les ouvertures 66 sont positionnées de telle manière que lorsqu'un filtre se trouve dans la position choisie, simultanément une ouverture 66 se trouve dans l'axe des diodes émettrices-réceptrices 71a-71b, de sorte que le signal de la diode réceptrice commande l'arrêt du "moteur-filtres" entraînant les plateaux 60 et 68.

Le "moteur-filtres" entraînant à la fois le plateau 68 de commande de positionnement et le plateau 60 portefiltres est commandé en outre par des moyens informatiques. Le but visé par le dispositif selon l'invention est l'obtention de l'enregistrement en continu du signal issu du compteur proportionnel en fonction de l'incidence θ = X.

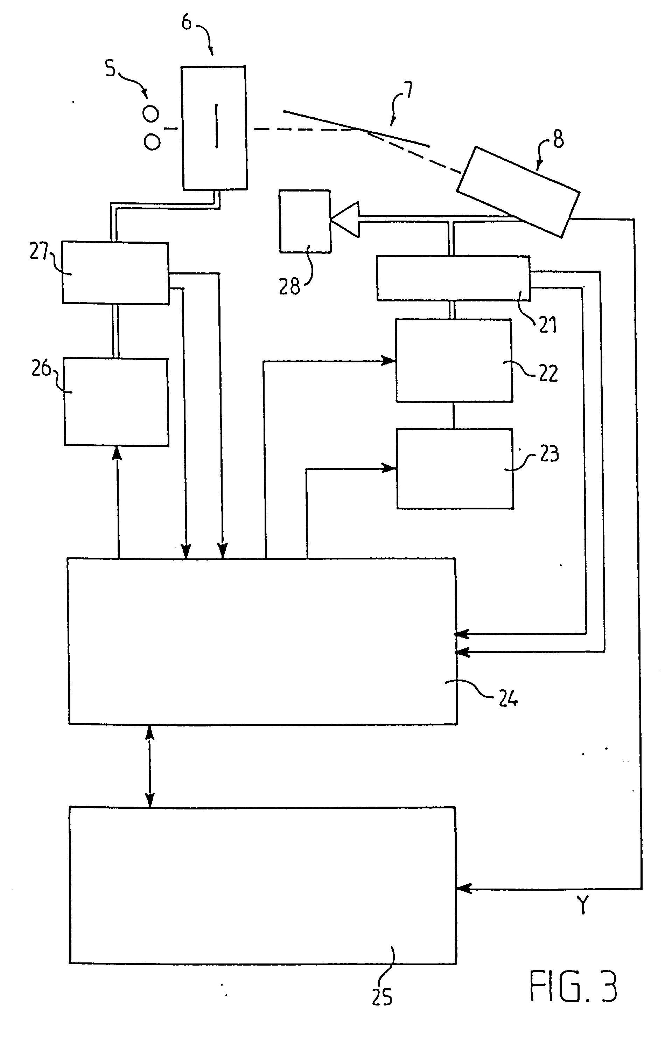

Les fonctions mises en oeuvre par les moyens informatiques de commande sont représentées sur la figure 3.

Ces fonctions comprennent le codage, par un codeur 27, d'un signal correspondant au filtre en place sur le trajet du faisceau réfléchi. Cette information codée est alors portée comme une donnée dans une carte microprocesseur 24 en liaison avec un ordinateur principal 25.

La fonction de mise en marche (marche-arrêt) du premier moteur dit "moteur-filtres" est notée 26. D'autre part, le signal Y issu du compteur proportionnel 8 est enregistré en mV en fonction de θ, (signal X). Dès que le signal Y devient soit inférieur à une valeur prédéterminée, soit supérieur à une autre valeur prédéterminée, l'ordre d'arrêt d'un second moteur, dit "moteur-échantillon", qui entraîne l'échantillon à passer par un pas $\Delta\theta$, de l'incidence θ à l'incidence θ+$\Delta\theta$, est donné à la carte microprocesseur 24, par l'intermédiaire d'un codeur 21. L'ordre d'arrêt parvient au "moteur-échantillon" 28 par la fonction marche-arrêt 22, VIA le codeur 21.

Le "moteur-filtres" se met alors en marche pour permettre, par le système 6, la mise en place d'un filtre soit plus absorbant, soit moins absorbant. Cette opération est effectuée par la commande 26 du "moteur-filtres" qui parvient au système 6 VIA le codeur 27.

Une fois la rotation du porte-filtres 60 réalisée, le "moteur-filtres" s'arrête (par le système des diodes 71a-71b) et l'ordre de reprise de l'enregistrement est donné par la commande marche-arrêt 22 du "moteur-échantillon" VIA le codeur 21. D'autre part, la fonction 23 est une fonction d'inversion du "moteur-échantillon" utilisée lorsque ledit moteur arrive en fin de course 0 ou θ dans un sens ou dans l'autre.

Lorsque le filtre le moins absorbant est en place (par exemple le filtre 62f, d'absorption 1) l'enregistrement des données Y provenant du compteur et X provenant du moteur-échantillon pourra continuer sans s'arrêter, même si la valeur mesurée devient inférieure à une borne inférieure prédéterminée.

Le codeur 21 placé sur le moteur-échantillon permet essentiellement le choix des pas de mesure $\Delta\theta$.

Dans ces conditions on obtient au moyen du dispositif selon l'invention une extension du taux de comptage du compteur proportionnel.

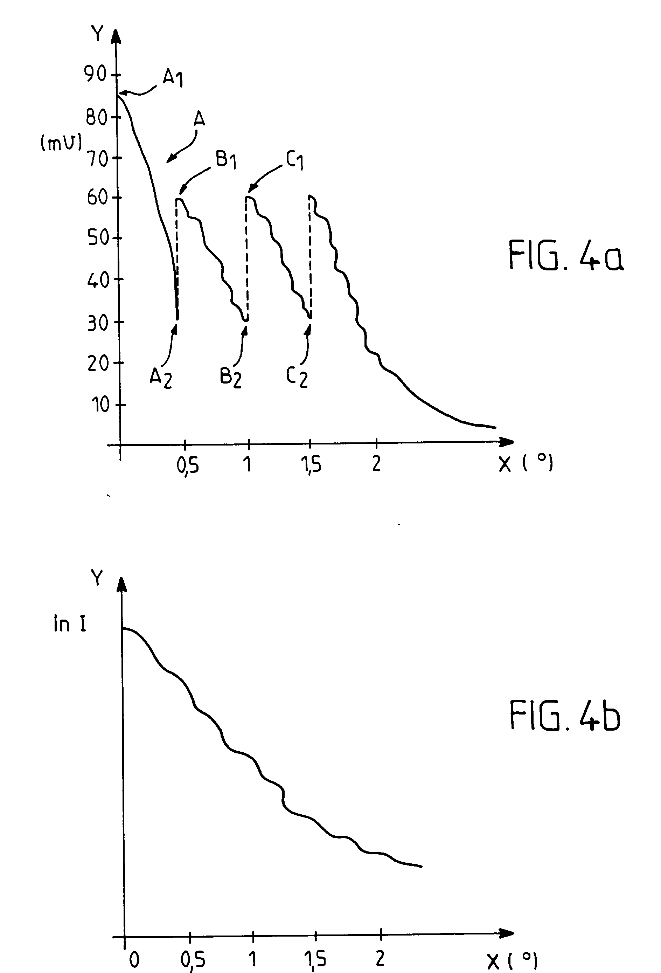

La figure 4a montre une courbe brute obtenue avec le dispositif selon l'invention. Dans la partie A de la courbe, l'intensité réfléchie, portée en Y, est d'abord très forte. C'est pourquoi un filtre très absorbant est employé. Puis l'intensité décroît en fonction de l'angle θ porté en abscisse X. Dans la région basse de la partie A, cette intensité deviendrait difficile à définir si l'enregistrement n'était coupé au point $A_2$. Le filtre très absorbant est alors remplacé par un filtre environ 10 fois moins absorbant par rotation du porte-filtre 60, puis l'enregistrement est repris. On obtient alors la partie de courbe $B_1$-$B_2$. En $B_2$, l'intensité devient encore faible et à nouveau l'enregistrement est coupé. Le filtre est remplacé par un filtre environ 10 fois moins absorbant par rotation du porte-filtre 60, puis l'enregistrement est repris.

Si au contraire, l'intensité croît au-delà d'une valeur prédéterminée, l'enregistrement est également coupé et un filtre plus absorbant est mis en place.

Ainsi, la mise en place du filtre approprié à la gamme d'intensité prédéterminée est automatique. Le manipulateur n'a pas à intervenir dans cette opération au cours de l'enregistrement du signal Y du compteur en fonction de $X = \theta$.

Pour obtenir en outre une courbe d'enregistrement lisse, des seconds moyens informatiques sont mis en place. La figure 4b montre la courbe de la figure 4a lorsque les données ont été traitées. La courbe est alors continue, les bornes A2 et $B_1$, $B_2$ et $C_1$ etc.. ayant été mises en coïncidence.

Ces seconds moyens informatiques comprennent un logiciel mais pourraient éventuellement être constitués d'un circuit câblé. Dans le cas de l'utilisation d'un logiciel, l'algorithme suivant est utilisé :

1) Initialisation de la mesure du signal issu du compteur proportionnel, c'est-à-dire d'un multimètre en mV de 0 à 100 mV.

2) MESURE

    a) Bornes du graphique
    b) Bornes de la mesure
    c) Test du changement de filtre
    $d_1$) Si mesure du multimètre > 90 mV $\rightarrow$ mettre en place filtre plus absorbant ;
    $d_2$) Si mesure du multimètre < bornes de réflexion minimales (par exemple 20 ou 50 mV) $\rightarrow$ mettre en place filtre moins absorbant ;

3) Fin de mesure

    a) SAUVEGARDE du fichier
    b) NORMALISATION et correction des mesures.
    c) LECTURE d'une mesure $\rightarrow$ nom du fichier

4) RETRACE des mesures

    $a_1$) linéaire
    $a_2$) linéaire-logarithmique

5) IMPRIMANTE : sortie sur imprimante

6) FORMATAGE (ASCII) = Transformation d'un fichier en caractères calcul machine pour exploitation par l'ordinateur central.

## Revendications

1. Dispositif de diffractométrie à rayons X, comprenant une source (1) de rayons X, un dispositif de collimation (2,3) de la source pour fournir un faisceau de rayons X référencé faisceau incident, un support (11) pour un échantillon (10), un dispositif de collimation (5) du faisceau réfléchi par l'échantillon et un compteur (8) fournissant un signal de sortie sous la forme d'une tension proportionnelle au nombre de photons réfléchis par l'échantillon, caractérisé en ce qu'il comprend en outre :

   - une motorisation du support d'échantillon pour le réglage de l'angle ($\theta$) du faisceau incident avec un plan de l'échantillon ;
   - un système de traitement (30,40,50) du signal Y issu du compteur proportionnel en fonction de l'angle ($\theta$) entre le plan de l'échantillon et le faisceau incident, noté X ;
   - un système d'automatisation (20) incluant :

     * des moyens mécaniques (6,62) incluant un support (6) pour une pluralité de filtres (62) ayant des coefficients d'absorption différents et incluant une motorisation de ce support de filtres ;
     * des premiers moyens informatiques (21 à 28) pour sélectionner un des filtres du support de filtres, et pour commander respectivement la motorisation du support d'échantillon, la motorisation du support de filtres et le système de traitement.

2. Dispositif selon la revendication 1, caractérisé en ce que les premiers moyens informatiques (21 à 28) comprennent des moyens pour réaliser des fonctions incluant des moyens (25) pour :

   - mesurer la grandeur du signal Y issu du compteur proportionnel par rapport à des plages dont les bornes sont prédéterminées ;
     et si une borne est atteinte, des moyens (24) pour :
   - actionner vers arrêt un interrupteur de l'enregistrement et un interrupteur (22) de la motorisation de l'échantillon ;
   - sélectionner un filtre (62a à 62f) parmi la pluralité de filtres ;
   - actionner vers marche un interrupteur (26) de la motorisation du support (6) de filtres de manière à amener le filtre (62a à 62f) sélectionné sur le trajet du faisceau de rayons X réfléchi par l'échantillon (10) ;
   - actionner vers marche l'interrupteur d'enregistrement et l'interrupteur (22) de la motorisation d'échantillon.

3. Dispositif selon l'une des revendications 1 ou 2, caractérisé en ce que les moyens mécaniques (6) comprennent un moyen d'immobilisation (71a-71b) du support de filtres dans la position où un filtre sélectionné (62a à 62f) est en place sur le trajet du faisceau réfléchi par l'échantillon.

4. Dispositif selon la revendication 3, caractérisé en ce que le moyen d'immobilisation comprend des ouvertures (66a à 66f) formées dans un support (68) couplé au support (60) de filtres, en nombre correspondant au nombre des filtres, et disposées de manière à ce que le passage d'une ouverture sur le trajet d'un faisceau dans un système de diodes émettrices-réceptrices (71a-71b) actionne l'interrupteur (26) de la motorisation de filtres vers arrêt.

5. Dispositif selon l'une des revendications 1 à 4, caractérisé en ce que la pluralité de filtres (62a à 62f) comprend des filtres pour rayons X dont le coefficient d'absorption A est choisi parmi $10^0$, $10^1$,... $10^n$ avec n entier, en ce que ces filtres sont disposés sur le porte-filtres (60) dans un ordre où leur coefficient d'absorption A est décroissant.

6. Dispositif selon la revendication 5, caractérisé en ce que le support de filtres (60) est un plateau entraîné par courroie (64) par un moteur.

7. Dispositif selon l'une des revendications 5 ou 6, caractérisé en ce que les ouvertures (66a à 66f) couplées aux diodes émettrices-réceptrices (71a, 71b) sont formées dans un plateau (68) entraîné par courroie (64) par un moteur.

8. Dispositif selon la revendication 7, caractérisé en ce que le support de filtre (60) et le plateau (68) muni des ouvertures (66a à 66f) sont entraînés par un même moteur.

9. Dispositif selon l'une des revendications précédentes, caractérisé en ce que les filtres (62a à 62f) sont réalisés au moyen de lames métalliques d'épaisseur e décroissante.

10. Dispositif selon la revendication 9, caractérisé en ce que les métaux pour réaliser les filtres sont choisis en fonction de la longueur d'onde de la source de rayons X parmi Cu, Ni, Aℓ.

11. Dispositif selon l'une des revendications précédentes, caractérisé en ce qu'il comprend en outre desdits seconds moyens informatiques (40) pour lisser les courbes enregistrées.

12. Dispositif selon la revendication 11, caractérisé en ce que ces seconds moyens informatiques (40) comprennent au moins les fonctions :

   1) d'initialisation de la mesure issue du compteur proportionnel donnée par une tension électrique,
   2) de mesure des bornes du graphique, des bornes de la mesure du compteur, de test du changement de filtre, et si la mesure du compteur est supérieure à une borne donnée, la mise en place d'un filtre de plus grande absorption, alors que si la mesure du compteur est inférieure à une borne donnée correspondant à la réflexion minimale, la mise en place d'un filtre moins absorbant,
   3) de fin de mesure,
   4) de retracé des mesures,
   5) de sortie sur imprimante,
   6) de formatage.

13. Utilisation d'un dispositif selon l'une des revendications 1 à 12 en incidence rasante pour la caractérisation de dispositifs à couches multiples métalliques, semiconducteurs ou isolantes, dans laquelle l'angle θ varie par pas entre 0 et 2° d'angle, chaque pas Δθ correspondant à une plage de mesures effectuées avec un filtre spécifique pour que le compteur proportionnel fonctionne dans une région où sa réponse est linéaire.

## Patentansprüche

1. Röntgenstrahlungdiffraktormetrievorrichtung mit einer Röntgenstrahlungsquelle (1), einem Kollimator (2, 3) der Quelle zum Liefern eines Röntgenstrahlungsbündels mit der Bezeichnung des einfallenden Bündels, mit einem Träger (11) für eine Probe (10), mit einem Kollimator (5) für das von der Probe reflektierte Bündel und einem Zähler (8) zum Ausgeben eines Ausgangssignals in Form einer Spannung proportional der von der Probe reflektierten Photonenanzahl, dadurch gekennzeichnet, daß die Vorrichtung außerdem folgende Elemente enthält:

   - eine Motorisierung des Probenträgers für die Regelung des Winkel θ des Einfallsbündels mit einer Probenebene,
   - ein Aufbereitungssystem (30, 40, 50) des vom Proportionalzähler abhängig vom Winkel (θ) zwischen der Probenebene und dem Einfallsbündel mit der Bezeichnung X ausgegebenen Signals Y,
   - ein Automatisierungssystem (20) mit folgenden Elementen:

      * mechanische Mittel (6,62) mit einem Träger (6) für eine Anzahl von Filtern (62) mit verschiedenen Absorptionskoeffizienten und mit einer Motorisierung dieses Filterträgers;
      * Informationsmittel (21 bis 28) zum Wählen eines der Filter auf dem Filterträger und zum Steuern der Motorisierung des Probenträgers, der Motorisierung des Filterträgers und zum Steuern des Aufbereitungssystems.

2. Vorrichtung nach Anspruch 1, dadurch gekennzeichnet, daß die ersten Informationsmittel (21 bis 28) Mittel zum Verwirklichen der Aufgaben mit den Mitteln (25) enthalten, um:

   - die Größe des vom Proportionalzähler in bezug auf die Ebenen ausgegebenen Signals Y, dessen Ausgänge vorgegeben sind,
   und wenn ein Ausgang erreicht wird, mit Mitteln (24), um
   - einen Aufzeichnungsunterbrecher und einen Unterbrecher (22) der Probenmotorisierung in die Ausgangsstellung zu bringen,
   - ein Filter (62a bis 62f) aus der Anzahl von Filtern zu wählen,
   - einen Unterbrecher (26) der Motorisierung des Filterträgers (6) derart einzuschalten, daß das gewählte Filter (62a bis 62f) in die Bahn des von der Probe (10) reflektierten Röntgenstrahlungsbündels einzuführen,
- den Aufzeichnungsunterbrecher und den Unterbrecher (22) der Probenmotorisierung einzuschalten.

3. Vorrichtung nach einem der Ansprüche 1 oder 2, dadurch gekennzeichnet, daß die mechanischen Mittel (6) ein Stillstandsmittel (71a-71b) für den Filterträger in der Position enthalten, in der ein gewähltes Filter (62a bis 62f) sich in der Bahn des von der Probe reflektierten Bündels befindet.

4. Vorrichtung nach Anspruch 3, dadurch gekennzeichnet, daß das Stillstandsmittel Öffnungen (66a bis 66f) in einem Träger (68) enthält, der mit dem Filterträger (60) gekoppelt ist, und die Anzahl der Öffnungen entspricht dabei die Anzahl der Filter und sie sind derart angeordnet, daß der Durchgang einer Öffnung in der Bahn eines Bündels in einem System von Sender/Empfängerdioden (71a-71b) den Unterbrecher (26) der Filtermotorisierung in die Ausschaltstellung aktiviert.

5. Vorrichtung nach einem der Ansprüche 1 bis 4, dadurch gekennzeichnet, daß die Anzahl der Filter (62a bis 62f) Filter für Röntgenstrahlen enthält, deren Absorptionskoeffizient A aus $10^0$, $10^1$...$10^n$ gewählt wird, wobei n eine Ganzzahl ist, und daß diese Filter in einer Reihenfolge auf dem Filterträger (60) angeordnet werden, daß ihr Absorptionskoeffizient A kleiner wird.

6. Vorrichtung nach Anspruch 5, dadurch gekennzeichnet, daß der Filterträger (60) eine vom Antriebsband (64) durch einen Motor angetriebene Platte ist.

7. Vorrichtung nach einem der Ansprüche 5 oder 6, dadurch gekennzeichnet, daß die Öffnungen (66a bis 66f), die mit den Sender/Empfängerdioden (71a, 71b) gekoppelt sind, in einer Platte (68) angebracht sind, die vom Antriebsband (64) durch einen Motor angetrieben wird.

8. Vorrichtung nach Anspruch 7, daß der Filterträger (60) und die Platte (68) mit den Öffnungen (66a bis 66f) vom selben Motor angetrieben werden.

9. Vorrichtung nach einem oder mehreren der vorangehenden Ansprüche, dadurch gekennzeichnet, daß die Filter (62a bis 62f) mit Hilfe von Metalllamellen mit einer abfallenden Dicke e verwirklicht sind.

10. Vorrichtung nach Anspruch 9, dadurch gekennzeichnet, daß die Metalle zum Verwirklichen der Filter abhängig von der Wellenlänge der Röntgenstrahlungsquelle aus Cu, Ni, Al gewählt werden.

11. Vorrichtung nach einem oder mehreren der vorangehenden Ansprüche, dadurch gekennzeichnet, daß sie außerdem zweite Informationsmittel (40) zum Glätten der aufgezeichneten Kurven enthält.

12. Vorrichtung nach Anspruch 11, dadurch gekennzeichnet, daß diese zweiten Informationsmittel (40) wenigstens folgende Aufgaben erfüllen:

   1) Starten der vom Proportionalzähler angeregten Messung mit Hilfe einer elektrischen Spannung,
   2) Messung der Graphikausgänge, der Zählermeßausgänge, der Prüfung des Filteraustausches, und wenn die Messung des Zählers höher ist als einen vorgegebenen Ausgang den Einsatz eines Filters mit größerer Absorption, und wenn die Zählermessung kleiner ist als einen vorgegebenen Ausgang entsprechend der minimalen Reflexion den Einsatz eines weniger absorbierenden Filters,
   3) das Ende der Messung,
   4) die Nachführung der Messungen,
   5) den Ausgang nach dem Drucker,
   6) die Zeichenbildung.

13. Benutzung einer Erfindung nach einem der Ansprüche 1 bis 12 bei flachem Lichteinfall für die Kennzeichnung der Vorrichtungen mit Mehrfach-Metallschichten, mit Halbleitern oder Isoliermitteln, in denen der Winkel $\theta$ sich bezüglich des Winkels schrittweise zwischen 0 und 2° ändert, wobei jeder Schritt $\Delta\theta$ einem Meßfeld entspricht, wobei die Messungen mit einem spezifischen Filter durchgeführt werden, wodurch der Proportionalzähler in einem Bereich arbeitet, in dem sein Ergebnis linear ist.

## Claims

1. An X-ray diffractometer device, comprising an X-ray source (1), a collimator device (2, 3) for the source in order to supply an X-ray beam which is called the incident beam, a support (11) for a sample (10), a collimator device (5) for the beam reflected by the sample, and a counter (8) producing an output signal in the form of a voltage which is proportional to the number of photons reflected by the sample, characterized in that it also comprises:

   - a motor drive for the sample support in order to control the angle ($\theta$) of the incident beam relative to a sample plane;
   - a system (30, 40, 50) for processing the signal Y supplied by the proportional counter as a function of the angle ($\theta$) between the plane of incidence of the sample and the incident beam, denoted as X;
   - an automation system (20) including:

      * mechanical means (6, 62) having a support (6) for a plurality of filters (62) having different absorption coefficients and including a motor drive for this filter support;
      * first data processing means (21 to 28) for selecting one of the filters of the filter support and for controlling the motor drive of the sample support, the motor drive of the filter support and the processing system.

2. A device as claimed in Claim 1, characterized in that the first data processing means (21 to 28) comprise means for realizing functions, including means (25) for:

   - measuring the value of the signal Y originating from the proportional counter relative to ranges whose limits are predetermined;
   and if a limit is reached, means (24) for:
   - setting a recording interrupt or to the stop position and activating an interruptor (22) for the sample motor drive;
   - selecting a filter (62a to 62f) from the plurality of filters;
   - setting an interruptor (26) for the filter support (6) motor drive to the start position so as to move the selected filter (62a to 62f) into the path of the X-ray beam reflected by the sample (10);
   - setting the recording interruptor and the interruptor (22) for the sample motor drive to their start position.

3. A device as claimed in any one of the Claims 1 or 2, characterized in that, the mechanical means (6) comprise a means (71a-71b) for fixing the filter support in the position in which a selected filter (62a to 62f) is positioned in the path of the beam reflected by the sample.

4. A device as claimed in Claim 3, characterized in that the fixing means comprises apertures (66a to 66f) formed in a support (68) coupled to the filter support (60), the number of said apertures corresponding to the number of filters, and the apertures being disposed in such a manner that when an aperture passes through the path of a beam in an emitter-receiver diode system (71a-71b) the interruptor (26) for the filter motor drive is set to its stop position.

5. A device as claimed in any one of the Claims 1 to 4, characterized in that the plurality of filters (62a to 62f) comprises filters for X-rays whose coefficient of absorption A is chosen from among $10^0$, $10^1$,... $10^n$, wherein n is an integer, and in that these filters are accommodated on the filter support (60) in a decreasing sequence of coefficient of absorption A.

6. A device as claimed in Claim 5, characterized in that the filter support (60) is a plate which is driven by a motor *via* belt (64).

7. A device as claimed in any one of the Claims 5 or 6, characterized in that the apertures (66a to 66f) coupled to the emitter-receiver diodes (71a, 71b) are formed in a plate (68) which is driven by a motor *via* a belt (64).

8. A device as claimed in Claim 7, characterized in that the filter support (60) and the plate (68) with apertures (66a to 66f) are driven by the same motor.

9. A device as claimed in any one of the preceding Claims, characterized in that the filters (62a to 62f) are realised by means of thin metal strips of decreasing width e.

10. A device as claimed in Claim 9, characterized in that the metals for realizing the filters are chosen from among Cu, Ni, Al as a function of the wavelength of the X-ray source.

11. A device as claimed in any one of the preceding Claims, characterized in that it furthermore includes so-called second data processing means (40) for smoothing the recorded curves.

12. A device as claimed in Claim 11, characterized in that said second data processing means (40) comprise at least the functions of:

1) initialising the measurement supplied by the proportional counter as an electric voltage,
2) measuring the limits of the graph, the limits of the measurement by the counter, filter change test and, if the measurement effected by the counter exceeds a given limit, the positioning of a filter of higher absorption and if the measurement effected by the counter is below a given limit, corresponding to minimum reflection, the positioning of a less absorbing filter,
3) end of measurement,
4) retrieving the measurements,
5) printed output,
6) formatting.

13. The use of a device as claimed in any one of the Claims 1 to 12 in the grazing incidence mode in order to characterize devices comprising multi-layer metal layers, semiconductors or insulators, in which the angle $\theta$ varies step-wise between angular values of 0 and 2°, each step $\Delta\theta$ corresponding to a range of measurements performed with a specific filter to ensure that the proportional counter operates in a range in which its response is linear.

FIG. 1

EP 0 468 582 B1

FIG. 2a

EP 0 468 582 B1

FIG. 2b

FIG. 3

FIG. 4a

FIG. 4b